# DEMANDE DE BREVET EUROPEEN

(11) **EP 3 241 747 A1**
(43) Date de publication de la demande: **08.11.2017**
(21) Numéro de dépôt: 17168913.6
(22) Date de dépôt: 02.05.2017
(51) Int. Cl.: B64C 39/02, B64F 1/00

(54) **DISPOSITIF DE RECEPTION D'UN DRONE ET SYSTEME DE REPARTITION DE DRONES ASSOCIE**

(30) Priorité: 03.05.2016 FR 1654024
(71) Demandeur: Drone Hive, 91400 Orsay (FR)
(72) Inventeur: GRAVE, Romain, 91580 ETRECHY (FR); MICHELETTI, Matthieu, 92100 BOULOGNE-BILLANCOURT (FR)
(74) Mandataire: Cabinet Laurent & Charras

(57) **Abrégé**

L'invention concerne un dispositif de réception (10a) d'un drone (12) comportant :
- une enceinte (11a) ; et
- un bras comportant une première extrémité fixée à ladite enceinte et une seconde extrémité munie de moyens de réception de drones;
- ledit bras étant mobile entre deux positions :
∘ une position dépliée dans laquelle lesdits moyens de réception s'étendent à l'extérieur de ladite enceinte; et
∘ une position repliée dans laquelle lesdits moyens de réception sont contenus à l'intérieur de ladite enceinte;

- lesdits moyens de réception comportant un berceau formé par une base aux bords de laquelle s'élèvent au moins deux surfaces de guidage en regard l'une de l'autre, lesdites au moins deux surfaces de guidage s'étendant vers l'extérieur avec un angle supérieur à 90° entre ladite base et lesdites au moins deux surfaces de guidage de sorte à guider un drone vers ladite base.

## Description

### DOMAINE TECHNIQUE

L'invention se rattache au domaine des aéronefs sans pilote, communément appelé drones.

La présente invention concerne plus particulièrement l'automatisation de la logistique de drones. L'invention est avantageusement utilisée avec une flotte de drones.

L'invention peut être mise en oeuvre dans un grand nombre de domaines tels que le domaine agricole, l'architecture, la surveillance de sites sensibles...

### ART ANTERIEUR

Un drone désigne un appareil fonctionnant sans pilote, de manière automatique ou télécommandée. Il peut être destiné à porter des charges utiles notamment pour des missions de surveillances ou de renseignements.

L'usage de drones à des fins d'observations aériennes tend à se généraliser dans de nombreux domaines. Cependant, l'utilisation de drones reste subordonnée à de nombreuses contraintes matérielles et humaines. Par exemple, un opérateur est classiquement présent sur un site à observer pour télécommander un drone. L'opérateur assure également le lancement, la réception et la recharge en énergie du drone. Lorsque plusieurs drones sont utilisés, plusieurs opérateurs sont alors sollicités.

Pour améliorer la gestion des drones, il existe des drones automatique qui ne nécessitent pas d'être contrôlés manuellement mais suivent un algorithme de déplacement. Par exemple, ces drones peuvent inspecter des zones géographiques en fonction des coordonnées GPS (pour « Global Positioning System » dans la littérature anglo-saxonne) de la zone géographique.

Cependant, les drones automatiques ne répondent pas aux problèmes de lancement, de réception et de recharge en énergie des drones.

Pour remédier à ce problème, il est connu de la demande de brevet internationale WO 2013/055265 d'utiliser un dispositif autonome de lancement, de réception et de stockage des drones. Ce dispositif comporte une enceinte de stockage des drones et un bras amovible déplaçable à l'extérieur de l'enceinte pour lancer ou réceptionner un drone.

Pour effectuer une mission de surveillance, le bras accroche un drone stocké dans un compartiment de l'enceinte. Chaque drone possède la forme d'un avion et le bras comporte deux crochets adaptés à supporter le drone par ses ailes. Le bras est alors guidé en translation en dehors de l'enceinte et animé d'un mouvement de rotation de sorte à lancer le drone pour lui donner l'impulsion nécessaire à son décollage.

Lorsque la mission de surveillance est terminée, le drone se dirige vers le bras et les crochets captent le drone par ses ailes. Le bras est ensuite dirigé à l'intérieur de l'enceinte pour stocker le drone dans un compartiment vide de l'enceinte. Dans ce compartiment, la mémoire du drone est extraite de sorte à récupérer les images de la mission. La batterie du drone peut également être rechargée dans l'enceinte de manière automatique en vue d'une prochaine mission.

Cependant, le dispositif décrit dans la demande de brevet internationale WO 2013/055265 est particulièrement difficile à mettre en place en conditions réelles, c'est-à-dire en présence d'un vent, même faible. En effet, il est particulièrement difficile pour le bras de réaliser le lancement et la récupération du drone sous les ailes du drone. En outre, le drone et le bras sont synchronisés par des moyens de détermination de la position du drone, par exemple des moyens GPS. Ces moyens de positionnement présentent une précision trop faible pour synchroniser correctement le bras avec le drone en mouvement de sorte à capter le drone en conditions réelles.

Il s'ensuit que le dispositif décrit dans la demande de brevet internationale WO 2013/055265 n'est pas ou peu utilisé par manque de robustesse.

Le problème technique de l'invention consiste à développer un dispositif de réception et/ou d'envol de drones plus efficace.

### EXPOSE DE L'INVENTION

La présente invention vise à résoudre ce problème technique en proposant une enceinte associée à un bras dont une extrémité est pourvue d'un berceau présentant au moins deux surfaces de guidage de sorte à guider la réception du drone.

A cet effet, selon un premier aspect, l'invention concerne un dispositif de réception d'un drone comportant :
- une enceinte configurée pour stocker un drone ; et
- un bras comportant une première extrémité fixée à ladite enceinte et une seconde extrémité munie de moyens de réception de drones ;
- ledit bras étant mobile entre deux positions :
   ∘ une position dépliée dans laquelle lesdits moyens de réception s'étendent à l'extérieur de ladite enceinte de sorte qu'un drone puisse être réceptionné par lesdits moyens de réception ; et
   ∘ une position repliée dans laquelle lesdits moyens de réception sont contenus à l'intérieur de ladite enceinte.

L'invention est caractérisée en ce que lesdits moyens de réception comportent un berceau formé par une base aux bords de laquelle s'élèvent au moins deux surfaces de guidage en regard l'une de l'autre. Lesdites au moins deux surfaces de guidage s'étendent vers l'extérieur avec un angle supérieur à 90° entre ladite base et lesdites au moins deux surfaces de guidage de sorte à guider un drone vers ladite base.

L'invention permet ainsi de récupérer un drone en vol stationnaire au-dessus du berceau. Pour ce faire, lorsque le drone est positionné juste au-dessus du berceau en vol stationnaire, la puissance des moteurs diminue progressivement pour accompagner la descente du drone. Le drone descend alors dans le berceau et glisse le long d'au moins une surface de guidage afin d'être centré dans le berceau au niveau de la base.

Contrairement aux drones utilisés dans le dispositif de la demande de brevet internationale WO 2013/055265, l'invention est configurée pour interagir avec des drones aptes à effectuer des vols stationnaires, tels que les drones à hélices à axe vertical.

L'invention permet ainsi de réceptionner un drone même lorsque le drone est décalé de quelques millimètres/centimètres par rapport à la base du berceau. L'utilisation d'un berceau permet non seulement la correction des imprécisions du GPS du drone mais également de l'ensemble de la chaîne de positionnement du drone, par exemple due au vent.

Selon un mode de réalisation, ledit berceau comporte deux parois en regard l'une de l'autre formant deux surfaces de guidage. Ce mode de réalisation permet de limiter le poids du berceau par l'utilisation d'une structure ouverte.

Selon un mode de réalisation, ledit berceau comporte un anneau supérieur relié à ladite base par des montants, une face desdits montants dirigée vers l'intérieur dudit berceau formant lesdites au moins deux surfaces de guidage. Ce mode de réalisation permet également de limiter le poids du berceau par l'utilisation d'une structure ouverte.

Selon un mode de réalisation, ledit berceau comporte une structure pyramidale formée par quatre parois en regard deux à deux formant quatre surfaces de guidage. Ce mode de réalisation permet d'obtenir des surfaces de guidage sur l'intégralité du périmètre du berceau afin d'améliorer le guidage du drone quelle que soit son orientation par rapport au berceau.

Selon un mode de réalisation, ledit berceau comporte une extrémité supérieure munie d'une mousse d'amortissement. Ce mode de réalisation permet de limiter les chocs subis par le drone lorsque le drone entre en contact avec le berceau.

Selon un mode de réalisation, une face supérieure de ladite base dudit berceau comporte un motif apte à indiquer à un drone une position dudit berceau.

Ce mode de réalisation permet au drone de détecter la présence du berceau et de guider les déplacements du drone dans une phase d'approche.

Selon un mode de réalisation, ledit berceau comporte des moyens de recharge d'un drone. Ce mode de réalisation permet de recharger le drone dans le berceau lorsque le bras est dans la position repliée.

Selon un mode de réalisation, ledit bras comporte des moyens de déplacement en translation dudit berceau entre ladite position repliée et ladite position dépliée. Ce mode de réalisation permet de limiter l'encombrement du bras dans l'enceinte.

Selon un mode de réalisation, ledit bras comporte des moyens de déplacement en rotation dudit berceau entre ladite position repliée et ladite position dépliée. Ce mode de réalisation permet d'utiliser une partie du bras pour former une paroi de l'enceinte dans la position repliée.

Selon un second aspect, l'invention concerne un système de répartition de drones comportant :
- au moins un dispositif de réception selon le premier aspect de l'invention ; et
- une centrale de contrôle des drones configurée pour déterminer la position et l'état d'alimentation d'un ensemble de drones au cours du temps ;
- ladite centrale de contrôle des drones étant configurée pour déclencher un remplacement d'un drone en vol en fonction de l'état d'alimentation et de la position dudit drone;
- ledit au moins un dispositif de réception étant configuré pour déplacer ledit bras dans la position dépliée et permettre l'envol d'un drone de remplacement lorsque ladite centrale de contrôle déclenche le remplacement d'un drone en vol ;
- ledit au moins un dispositif de réception étant configuré pour déplacer ledit bras dans la position repliée lorsque ledit drone à remplacer est positionné sur ledit berceau de sorte à recharger ledit drone.

### DESCRIPTION SOMMAIRE DES FIGURES

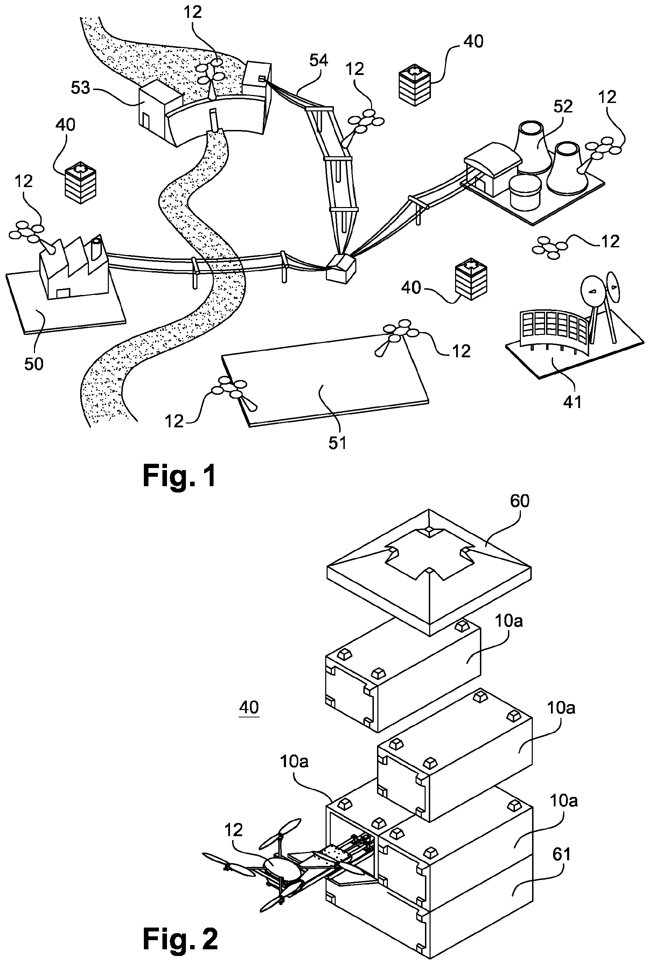

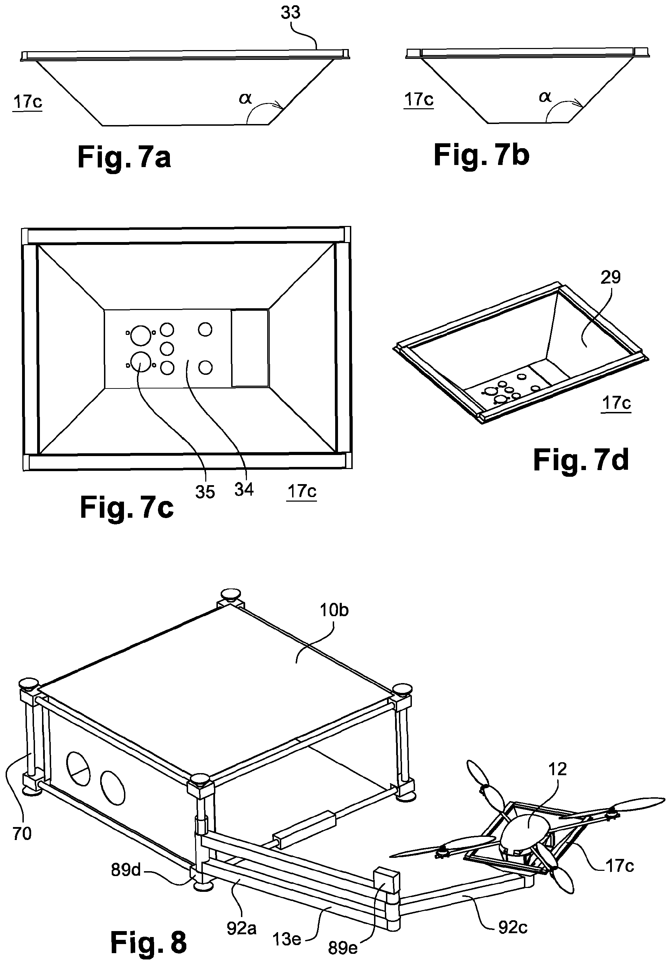

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 et 8 illustrent :
- figure 1 : une représentation schématique d'une région intégrant un ensemble de sites inspectés par des drones selon un mode de réalisation de l'invention ;
- figure 2 : une représentation schématique éclatée d'un centre de répartition de drones de la figure 1 ;
- figures 3a-3d : des représentations schématiques de face, en coupe transversale, en coupe longitudinale et en perspective d'un dispositif de réception d'un drone de la figure 2 selon un premier mode de réalisation de l'invention ;
- figures 4a-4d : des représentations schématiques de côté, de face, de dessus dans une position dépliée et en perspective dans une position repliée d'un bras du dispositif de réception des figures 3a-3d selon un premier mode de réalisation de l'invention ;
- figures 5a-5d : des représentations schématiques de côté, de face, en perspective dans une position dépliée et en perspective dans une position repliée du bras du dispositif de réception des figures 3a-3d selon un second mode de réalisation de l'invention ;
- figures 6a-6c : des représentations schématiques de face, de dessus et en perspective d'un berceau selon un second mode de réalisation de l'invention ;
- figures 7a-7d : des représentations schématiques de face, de côté, de dessus et en perspective d'un berceau selon un troisième mode de réalisation de l'invention ; et
- figure 8 : une représentation en perspective d'un dispositif de réception d'un drone selon un second mode de réalisation de l'invention.

### DESCRIPTION DETAILLEE DE L'INVENTION

La figure 1 illustre une région intégrant un ensemble de sites inspectés par des drones **12**. Les drones **12** réalisent diverses missions telles que la surveillance d'un site industriel **50**, d'une parcelle agricole **51**, d'une centrale de production d'énergie **52**, d'un barrage **53** et d'un réseau électrique **54**. Les drones **12** peuvent effectuer des vols stationnaires ou des déplacements au-dessus du site à surveiller en fonction des besoins.

L'ensemble des drones **12** est commandé par une centrale de contrôle **41** définissant la mission de chaque drone **12** et estimant le besoin de remplacement des drones **12**. Pour ce faire, la centrale de contrôle **41** détermine, au cours du temps, la position et l'état d'alimentation de chaque drone **12**. Lorsqu'une mission n'est pas encore terminée et qu'un drone **12** nécessite un remplacement, par exemple en raison d'un faible niveau d'énergie, la centrale de contrôle **41** assure le remplacement du drone **12** par un nouveau drone **12**. Pour ce faire, la région est pourvue de plusieurs éléments **40** assurant le stockage et la recharge des drones **12**.

Un exemple d'élément **40** est illustré sur la figure 2. L'élément **40** comporte plusieurs dispositifs de réception **10a** d'un drone **12** emboités entre eux sur une unité d'alimentation **61** assurant l'alimentation en énergie de l'élément **40**. Une unité de communication **60** est montée au-dessus des dispositifs de réception **10a**. L'unité de communication **60** communique avec la centrale de contrôle **41** de sorte à commander l'extraction ou la réception d'un drone **12** sous la commande de la centrale de contrôle **41**. L'unité de communication **60** peut également assurer une communication avec un drone 12 en phase d'approche de sorte à guider les déplacements du drone **12**.

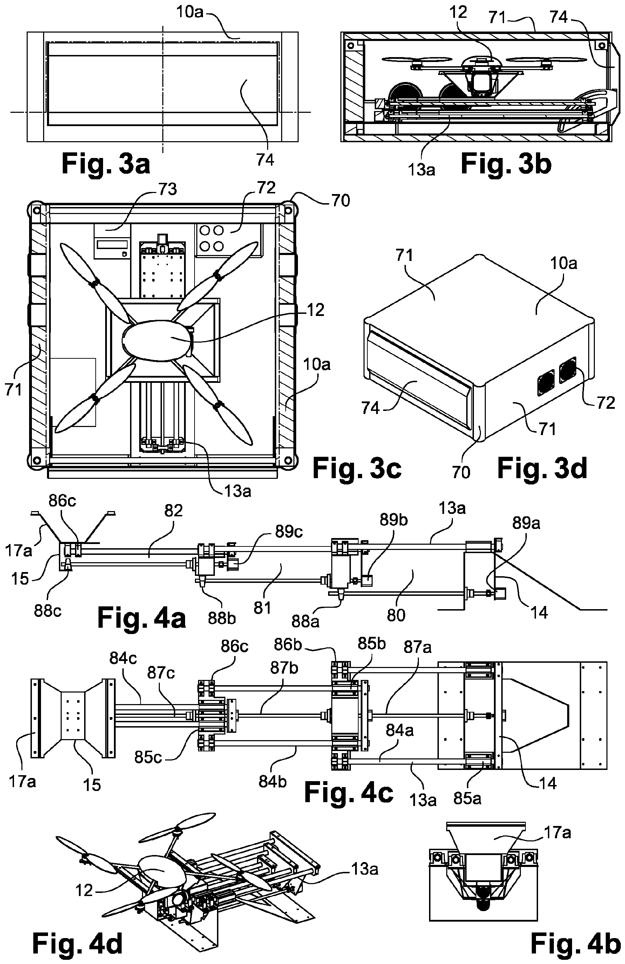

L'extraction ou la réception d'un drone **12** est réalisée par les dispositifs de réception **10a**. Un exemple de dispositif de réception **10a** est illustré sur les figures 3a-3d. Ce dispositif de réception **10a** comporte une structure tubulaire **70** parallélépipédique et métallique assurant la tenue mécanique du dispositif de réception **10a**. Cette structure tubulaire **70** est recouverte d'une coque **71** en fibre de verre protégeant l'intérieur du dispositif **10a** de la pluie et limitant le poids des parois du dispositif **10a**. La face interne de la coque **71** est préférentiellement munie d'une couche isolante. Le dispositif **10a** comporte également plusieurs sous-systèmes tels qu'un système embarqué **73** assurant la commande des organes mobiles, un système de ventilation **72** et un dispositif d'alimentation du drone **12** ou un dispositif de remplacement des batteries du drone **12**. En variante, la structure externe ou les sous-systèmes du dispositif **10a** peut varier sans changer l'invention.

En outre, le dispositif **10a** comporte une porte **74** dont l'ouverture est commandée par le système embarqué **73**. La porte **74** est une porte à bascule actionnée par deux vérins hydrauliques. En variante, la porte **74** correspond à une porte à battants, à un volet roulant ou à une porte à galandage et l'actionnement peut être réalisé par un câble ou une crémaillère.

Le dispositif **10a** comporte également un bras **13a** mobile entre deux positions : une position dépliée et une position repliée de sorte à extraire ou réceptionner un drone **12** en dehors de la structure parallélépipédique du dispositif **10a**.

La structure et le fonctionnement du bras **13a** est décrite en référence aux figures 4a à 4d dans lesquelles le bras **13a** est déplaçable en translation. Le bras **13a** comporte une première extrémité **14** fixée à l'enceinte **11a** par une platine et une seconde extrémité **15**, opposée à la première extrémité **14**, destinée à supporter un drone **12**.

Entre ses deux extrémités **14** et **15**, le bras **13a** comporte trois portions **80-82** mobiles l'une par rapport à l'autre au moyen d'un actionneur **87a-87c** et de deux éléments de guidage **84a-84c** de section circulaire. Chaque élément de guidage **84a-84c** est monté, libre en translation, dans une bague **85a-85c** et fixé à une extrémité dans un collier **86a-86c**. Plus précisément, les éléments de guidage **84a** de la première portion **80** sont montés entre une bague **85a** fixée à la première extrémité **14** et un collier **86a** fixé à la seconde portion **81**. Les éléments de guidage **84b** de la seconde portion **81** sont montés entre une bague **85b** fixée à l'intérieur de la seconde portion **81** au niveau de chaque collier **86a** de la première portion **80** et un collier **86b** fixé à la troisième portion **82**. Les éléments de guidage **84c** de la troisième portion **82** sont montés entre une bague **85c** fixée à l'intérieur de la troisième portion **82** au niveau de chaque collier **86b** de la seconde portion **81** et un collier **86c** fixé à la seconde extrémité **15**.

Le déplacement des portions **80-82** est commandé par trois actionneurs **87a-87c** prenant la forme d'une vis à bille dont une première extrémité est fixée à une moteur **89a-89c** et une seconde extrémité est montée dans un écrou **88a-88c**.

Plus précisément, la première vise à bille **87a** est montée entre un premier moteur **89a** fixé à la première extrémité **14** et un écrou **88a** fixé à la seconde portion **81**. La seconde vise à bille **87b** est montée entre un second moteur **89b** fixé à la seconde portion **81** et un écrou **88a** fixé à la troisième portion **82**. La troisième vise à bille **87c** est montée entre un troisième moteur **89c** fixé à la troisième portion **82** et un écrou **88a** fixé à la seconde extrémité **15**.

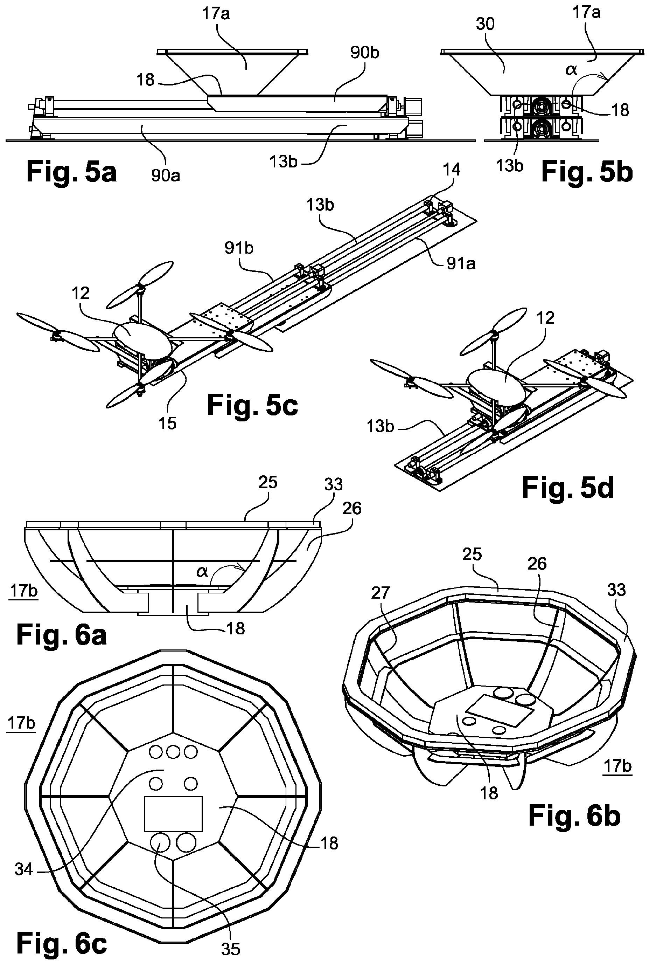

L'actionnement de chaque moteur **89a-89c** permet de rapprocher ou d'éloigner deux portions **80-82** entre elles. Dans la position dépliée, tel qu'illustré sur les figures 6a-6c, les éléments de guidage **84a-84c** sont déployés au maximum de leurs longueurs entre les bagues **85a-85c** et les colliers **86a-86c**. Il s'ensuit que les deux extrémités **14-15** sont éloignées entre elles.

Dans la position repliée, tel qu'illustré sur la figure 4d, les bagues **85a-85c** viennent en butée contre les colliers **86a-86c**. Il s'ensuit que les deux extrémités **14-15** sont proches.

Ce mode de réalisation du bras **13a** avec trois portions **80-82** et des éléments de guidage **84a-84c** permet de soutenir efficacement le poids des drones **12**. En variante, la forme et la structure du bras peut varier sans changer l'invention. Par exemple, les actionneurs **87a-87c** peuvent être réalisés par des câbles et des poulies, des pignons à crémaillère ou des courroies. Le bras **13a** peut comporter une seule portion avec des éléments de guidage de section prismatique. Tel qu'illustré sur les figures 5a à 5d, le bras **13b** comporte deux portions **90a-90b** mobiles l'une sur l'autre à la manière d'un tiroir. Les portions **90a-90b** sont montées sur des rails **91a-91b** par des roulettes.

D'autres modes de réalisation du bras peuvent également être mis en oeuvre sans changer l'invention, tel qu'illustré sur la figure 8. Dans ce mode de réalisation, le bras **13c** est monté de manière rotative par rapport à la structure **70**. Pour ce faire, le bras **13c** comporte deux portions **92a-92b**. Une extrémité de la première portion **92a** est montée sur un montant de la structure **70**. Les mouvements de rotation de cette première portion **92a** par rapport au montant de la structure **70** sont guidés par un premier moteur **89d**.

Une seconde extrémité de cette première portion **92b** est montée, libre en rotation, avec une première extrémité de la seconde portion **92b**. Les mouvements de rotation de cette seconde portion **92b** par rapport à la première portion **92a** sont guidés par un second moteur **89e**. Dans ce mode de réalisation, la première portion **92a** du bras **13c** forme une paroi de l'enceinte **10b** dans la position repliée.

L'invention se caractérise par des moyens de réception adaptés à récupérer efficacement un drone **12** en vol stationnaire au-dessus de l'enceinte **10a-10b**. Les moyens de réception sont formés par des surfaces de guidage ménagées dans un berceau **17a-17c** fixé sur la seconde extrémité **15** du bras **13a-13b**.

Un premier exemple de berceau **17a** est illustré sur les figures 4 et 5 et comporte une base **18** de forme rectangulaire. Deux parois **30** de forme trapézoïdale s'élèvent des deux longueurs de la base **18**. Les parois **30** s'étendent en regard l'une de l'autre vers l'extérieur du berceau **17a-17c** formant un angle **α** avec la base **18** supérieur à 90°. Les surfaces de guidages sont formées par les deux parois **30.**

Un second exemple de berceau **17b** est illustré sur les figures 6a-6c et comporte un anneau supérieur **25** octogonal. Chaque angle de l'anneau supérieur **25** est relié à un angle d'une base **18** octogonale par un montant **26** formant un angle **α** avec la base **18** supérieur à 90°. Les surfaces de guidages sont formées par les faces internes **27** des montants **26**.

Un troisième exemple de berceau **17c** est illustré sur les figures 7a-7d et comporte une structure pyramidale s'élevant d'une base **18** rectangulaire. Chaque paroi **29** de forme trapézoïdale de la structure pyramidale forme un angle **α** avec la base **18** supérieur à 90°. Les parois **29**, en regard deux à deux, s'étendent jusqu'à un rebord dont le périmètre est rectangulaire. Les surfaces de guidages sont formées par les quatre parois **29**.

Ainsi, la forme du berceau **17a-17c** de l'invention n'est pas limitative mais les surfaces de guidages doivent être dirigées vers l'extérieur du berceau **17a-17c** afin que le drone **12** soit guidé vers la base **18**. L'extrémité supérieure du berceau **17a-17c** peut être recouverte d'une mousse d'amortissement pour limiter les chocs entre le drone **12** et le berceau **17a-17c**. En outre, la base **18** du berceau **17a-17c** comporte préférentiellement un motif **34** destiné à guider le drone **12** dans une phase d'approche.

L'invention permet ainsi de récupérer efficacement un drone **12** en vol stationnaire au-dessus de l'enceinte **10a-10b**. Pour ce faire, le drone **12** présente une caméra configurée pour capturer une zone dirigée vers le bas du drone **12**.

L'image issue de la caméra est analysée au cours du temps afin de détecter le motif **34**. Lorsque le motif **34** est détecté, le drone **12** se dirige pour se positionner au-dessus du motif **34**. Plus précisément, en fonction de la taille du motif **34** dans l'image issue de la caméra, le drone **12** peut estimer la distance qui le sépare du berceau **17a-17c**. Les moteurs du drone **12** sont alors actionnés en direction du motif **34**. Lorsque la taille du motif **34** capturé par la caméra est supérieure à une valeur seuil, le drone **12** considère qu'il est positionné au-dessus du berceau **17a-17c**. La puissance des moteurs du drone **12** est alors diminuée progressivement et le drone **12** est guidé dans le berceau **17a-17c** en glissant contre au moins une surface de guidage. Le drone **12** est ainsi centré sur la base **18** du berceau **17a-17c**. Le bras **13a-13b** est alors replié à l'intérieur de l'enceinte **11a-11b** de sorte à protéger le drone **12**. La mémoire du drone **12** est alors extraite par le système embarqué **73** du drone **12** de sorte à transmettre, à la centrale de contrôle **41**, un flux d'image correspondant à la mission effectuée par le drone **12**.

Le drone **12** est également rechargé dans l'enceinte **11a-11b**. Pour ce faire, la base **18** peut comporter des connecteurs **35** reliés à un dispositif d'alimentation du drone **12**. En variante, l'enceinte **11a-11b** comporte un dispositif de remplacement des batteries du drone **12**. Il s'ensuit qu'après un temps de maintenance, le drone **12** est à nouveau opérationnel pour effectuer une nouvelle mission commandée par la centrale de contrôle **41**.

Le programme de la mission est alors transmis au drone **12** et le bras **13a-13b** est déplié afin que le drone **12** prenne son envol pour la nouvelle mission. L'enceinte **11a-11b** peut alors recueillir un nouveau drone **12** à recharger.

## Revendications

1. Dispositif de réception (10a-10b) d'un drone (12) comportant :
- une enceinte (11a-11b) configurée pour stocker un drone (12) ; et
- un bras (13a-13c) comportant une première extrémité (14) fixée à ladite enceinte (11a-11b) et une seconde extrémité (15) munie de moyens de réception de drones (12) ;
- ledit bras (13a-13c) étant mobile entre deux positions :
∘ une position dépliée dans laquelle lesdits moyens de réception s'étendent à l'extérieur de ladite enceinte (11a-11b) de sorte qu'un drone (12) puisse être réceptionné par lesdits moyens de réception; et
∘ une position repliée dans laquelle lesdits moyens de réception sont contenus à l'intérieur de ladite enceinte (11a-11b) ;
**caractérisé en ce que** lesdits moyens de réception comportent un berceau (17a-17c) formé par une base (18) aux bords de laquelle s'élèvent au moins deux surfaces de guidage en regard l'une de l'autre, lesdites au moins deux surfaces de guidage s'étendant vers l'extérieur avec un angle (α) supérieur à 90° entre ladite base (18) et lesdites au moins deux surfaces de guidage de sorte à guider un drone (12) vers ladite base (18).

2. Dispositif de réception selon la revendication 1, dans lequel ledit berceau (17a) comporte deux parois (30) en regard l'une de l'autre formant deux surfaces de guidage.

3. Dispositif de réception selon la revendication 1, dans lequel ledit berceau (17b) comporte un anneau supérieur (25) relié à ladite base (18) par des montants (26), une face desdits montants (26) dirigée vers l'intérieur dudit berceau (17a) formant lesdites au moins deux surfaces de guidage.

4. Dispositif de réception selon la revendication 1, dans lequel ledit berceau (17c) comporte une structure pyramidale formée par quatre parois (29) en regard deux à deux formant quatre surfaces de guidage.

5. Dispositif de réception selon l'une des revendications 1 à 4, dans lequel ledit berceau (17a-17c) comporte une extrémité supérieure munie d'une mousse d'amortissement (33).

6. Dispositif de réception selon l'une des revendications 1 à 5, dans lequel une face supérieure de ladite base (18) dudit berceau (17a-17c) comporte un motif (34) apte à indiquer à un drone (12) une position dudit berceau (17a-17c).

7. Dispositif de réception selon l'une des revendications 1 à 6, dans lequel ledit berceau (17a-17c) comporte des moyens de recharge d'un drone (12).

8. Dispositif de réception selon l'une des revendications 1 à 7, dans lequel ledit bras (18a) comporte des moyens de déplacement en translation dudit berceau (17a-17c) entre ladite position repliée et ladite position dépliée.

9. Dispositif de réception selon l'une des revendications 1 à 7, dans lequel ledit bras (18b) comporte des moyens de déplacement en rotation dudit berceau (17a-17c) entre ladite position repliée et ladite position dépliée.

10. Système de répartition de drones (40) comportant :
- au moins un dispositif de réception (10a-10b) selon l'une des revendications 1 à 9 ; et
- une centrale de contrôle (41) des drones (12) configurée pour déterminer la position et l'état d'alimentation d'un ensemble de drones (12) au cours du temps ;
- ladite centrale de contrôle (41) des drones (12) étant configurée pour déclencher un remplacement d'un drone (12) en vol en fonction de l'état d'alimentation et de la position dudit drone (12) ;
- ledit au moins un dispositif de réception (10a-10b) étant configuré pour déplacer ledit bras (13a-13c) dans la position dépliée et permettre l'envol d'un drone (12) de remplacement lorsque ladite centrale de contrôle (41) déclenche le remplacement d'un drone (12) en vol ;
- ledit au moins un dispositif de réception (10a-10b) étant configuré pour déplacer ledit bras (13a-13c) dans la position repliée lorsque ledit drone (12) à remplacer est positionné sur ledit berceau (17a-17c) de sorte à recharger ledit drone (12).
